# EUROPEAN PATENT APPLICATION

(11) **EP 4 654 374 A1**
(43) Date of publication of application: **26.11.2025**
(21) Application number: 25167302.6
(22) Date of filing: 31.03.2025
(51) Int. Cl.: H01M 50/583, H01H 85/06, H01H 85/08, H01H 85/02, H01M 50/507, H01M 50/509, H01M 50/522

(54) **FUSE STRUCTURE, BUSBAR, BATTERY MODULE, BATTERY PACK AND APPARATUS**

(30) Priority: 23.05.2024 CN 202421144676 U; 19.09.2024 CN 202422296186 U; 16.10.2024 WO PCT/CN2024/125260
(71) Applicant: Eve Energy Co., Ltd., Huizhou, Guangdong 516006 (CN)
(72) Inventor: ZHOU, Jieyu, Huizhou, Guangdong, 516006 (CN); WU, Liesong, Huizhou, Guangdong, 516006 (CN); LI, Xiaokang, Huizhou, Guangdong, 516006 (CN); LI, Xingxing, Huizhou, Guangdong, 516006 (CN); HUANG, Guozhao, Huizhou, Guangdong, 516006 (CN); LI, Zhimiao, Huizhou, Guangdong, 516006 (CN); QI, Dongrong, Huizhou, Guangdong, 516006 (CN); LIU, Pengcheng, Huizhou, Guangdong, 516006 (CN)
(74) Representative: Biallo, Dario

(57) **Abstract**

A fuse structure, a busbar, a battery module, a battery pack and an apparatus are provided. A fuse structure includes a fuse (10) and a conductive member (20), at least two conductive members (20) are arranged on sides of the fuse (10), the conductive members (20) and the fuse (10) are spliced together, and the fuse (10) is in a curved and/or zigzag shape. A busbar includes multiple fuse structures. A battery module includes the busbar. A battery pack includes the battery module. An apparatus includes the battery pack.

## Description

### TECHNICAL FIELD

The present application relates to the field of batteries, and in particular to a fuse structure, busbar, battery module, battery pack and apparatus.

### BACKGROUND

The battery module includes several single cells which are connected in series and in parallel in a certain way through a busbar. In a case where multiple single cells are connected in parallel, if a short circuit occurs in a single cell and a fault occurs in the single cell, the current of the remaining single cells connected in parallel with the faulty cell will flow back to the faulty cell, causing thermal runaway of the battery module, and further causing thermal runaway on a larger scale. Currently, the battery industry generally designs fuse protection at the system level. The fuse protection structure set at the system level can hardly prevent the current of the remaining single cells connected in parallel with the faulty cell from flowing back to the faulty cell which will still cause thermal runaway of the battery module, though it can avoid causing thermal runaway on a larger scale.

In order to avoid thermal runaway of the battery module, some conventional technologies adopt the technical solution of adding a temperature fuse to the parallel end of the busbar. Since the temperature fuse has many parts and the busbar has a large number of parallel ends, the large-scale use of the temperature fuses not only increases the production cost, but also greatly increases the weight of the busbar. Some conventional technologies adopt the solution of directly making hollowed out and weak portions for the integrated structure busbar, for melting. However, the current busbar is generally made of copper, and the melting point of copper is 1083°C. The processing technology of directly making hollowed out and weak portions for the busbar is complicated, and the hollowed out and weak portions are prone to breakage during the production process, mechanical environment, etc. If the size of the hollowed out and weak portions is increased to avoid their breakage, a larger current is required to fuse, which has great application limitations.

### SUMMARY

A fuse structure, a busbar, a battery module, a battery pack and an apparatus are provided according to the present application.

In a first aspect, a fuse structure is provided according to the present application, the fuse structure includes a fuse and a conductive member, where at least two conductive members are arranged on sides of the fuse, the conductive members and the fuse are spliced together, and the fuse is in a curved and/or zigzag shape.

In a second aspect, a busbar is provided according to the present application, which includes multiple fuse structures according to the present application, and the multiple fuse structures are sequentially arranged in a second direction; in the same fuse structure, multiple conductive members and multiple fuses are arranged alternately in a third direction.

In a third aspect, a battery module is provided according to the present application, which includes the busbar according to the present application, and further includes multiple single cells. The positive electrode connection parts of the conductive members of the at least one fuse structure of the busbar are connected to positive electrodes of the single cells, and the negative electrode connection parts of the conductive members are connected to negative electrodes of the single cells. Two single cells connected to the same conductive member are mutually connected in series, two conductive members connected to the same single cell are mutually connected in series, the conductive members and the single cells mutually connected in series constitute a battery unit, and multiple battery units are mutually connected in parallel by the fuses. The battery module further includes a main positive busbar, a main negative busbar and a clamping plate. The main positive busbar is connected to the positive electrodes of the single cells, and the main negative busbar is connected to the negative electrodes of the single cells. The busbar, the single cells, the main positive busbar and the main negative busbar are all connected to the clamping plate.

In a fourth aspect, a battery pack is provided according to the present application, which includes the battery module according to the present application.

In a fifth aspect, an apparatus is provided according to the present application, which includes the battery pack according to the present application.

### BRIEF DESCRIPTION OF DRAWINGS

FIG. 1 is a schematic structural diagram of a busbar according to the present application;
FIG. 2 is a schematic diagram showing partial structure of the busbar in FIG. 1 according to the present application;
FIG. 3 is a schematic structural diagram of a battery module according to the present application; and
FIG. 4 is a schematic diagram showing partial structure of the battery module in FIG. 3 according to the present application.

### Reference numerals list:

10 fuse
101 fuse link
102 connection piece
20 conductive member
201 positive electrode connection part
202 negative electrode connection part
30 single cell
40 process hole
50 main positive busbar
60 main negative busbar
70 clamping plate
80 positioning hole
a first direction
b third direction

### DETAILED DESCRIPTION

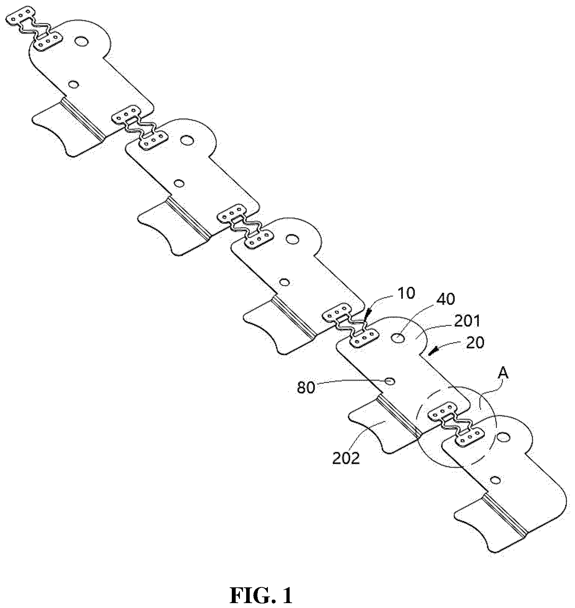

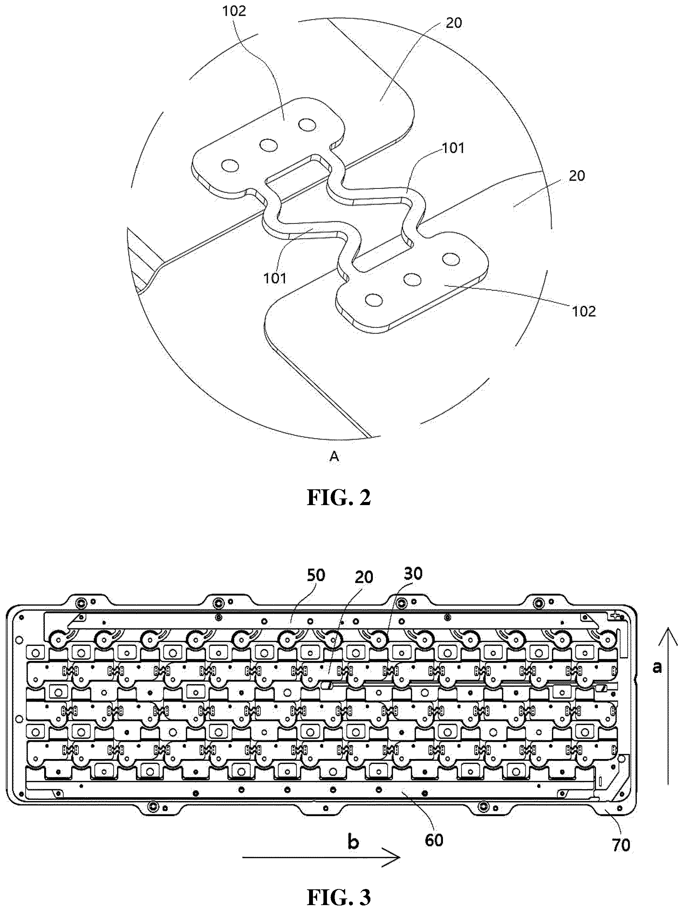

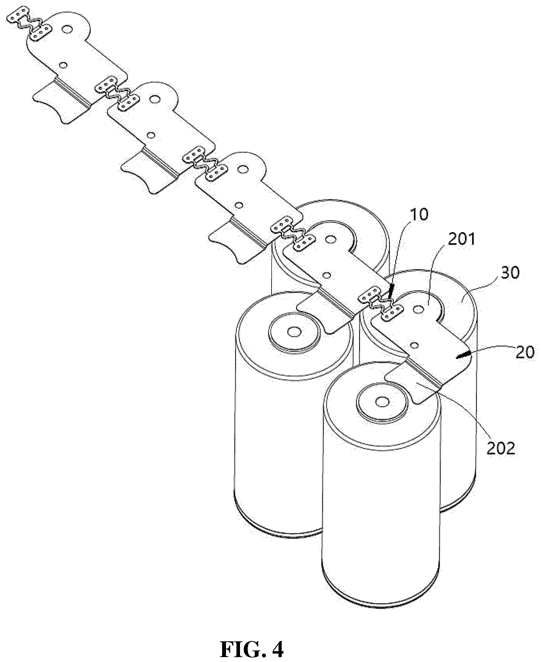

Referring to FIG. 1 to FIG. 4, a fuse structure is disclosed according to the present application, which includes a fuse 10 and a conductive member 20. At least two conductive members 20 are arranged on sides of the fuse 10. The conductive members 20 and the fuse 10 are spliced together. The fuse 10 is in a curved and/or zigzag shape.

It should be noted that the fuse 10 is in a curved shape, or the fuse 10 is in a zigzag shape, or a part of the fuse 10 is in a curved shape and another part is in a zigzag shape.

Specifically, the fuse 10 is in the shape of characters "N", "Z", "S", etc. The specific shape of the fuse 10 depends on the practical application situation and is not limited thereto.

The conductive member 20 and the fuse 10 in the fuse structure of the present application are spliced together to form a spliced structure, rather than an integrated structure in the prior art. In this way, during production, a fuse 10 with a melting point lower than that of the conductive member 20 can be selected according to the practical application situation. Thus, when a single cell 30 fails due to a short circuit, only a small current is required, and the fuse 10 can promptly and quickly cut off the electrical connection between the faulty single cell 30 and other single cells 30 connected in parallel with the faulty single cell, avoiding the current backflow causing the temperature of the faulty single cell 30 to be too high, thereby avoiding thermal runaway. The curved and/or zigzag-shaped fuse 10 can absorb the relative displacement between the two conductive members 20, such as the displacement caused by expansion during charging and discharging, displacement caused during mechanical vibration and impact, to avoid breakage and extend the service life.

In embodiments of the present application, the melting point of the fuse 10 is lower than that of the conductive member 20.

In embodiments of the present application, the conductive member 20 is made of copper and the fuse 10 is made of aluminum.

Specifically, the melting point of copper is 1083°C, and the melting point of aluminum is 660°C. When a single cell 30 fails due to a short circuit, only a small current is needed, and the fuse 10 can be melted in time and quickly, thereby cutting off the electrical connection between the faulty single cell 30 and other single cells 30 connected in parallel with the faulty single cell 30.

Of course, in other embodiments, the fuse 10 may also be other metals with melting points lower than that of the conductive member 20, which can be determined depending on the practical application situation, and is not limited to this.

In the embodiment of the present application, a nickel plating layer is provided on a surface of the conductive member 20, and the nickel plating layer is used for surface corrosion protection of the conductive member 20.

Specifically, the fuse 10 and the conductive member 20 are made separately or integrally, for example, the fuse 10 and the conductive members 20 are spliced by welding process, bonding process, casting process, screw nut connection and clamping. When splicing is performed by welding process, bonding process, screw nut connection and clamping, the fuse 10 and the conductive member 20 are both solid. When the casting process is adopted for splicing, the fuse 10 is solid, and the fuse 10 is set as an insert in the casting cavity of the conductive member 20. After the metal liquid used to form the conductive member 20 is cooled and solidified, the conductive member 20 and the fuse 10 are connected as one body; or the conductive member 20 is solid, and the conductive member 20 is set as an insert in the casting cavity of the fuse 10. After the metal liquid used to form the fuse 10 is cooled and solidified, the conductive member 20 and the fuse 10 are connected as one body. Of course, in some application cases, the casting mold can be used for one-piece molding. During the one-piece molding process, the metal liquid used to mold the fuse 10 and the metal liquid used to mold the conductive member 20 will not merge with each other, and there is a splicing line between the fuse 10 and conductive member 20 integrally molded.

In the embodiment of the present application, the fuse 10 includes a fuse link 101, and the fuse link 101 is in a curved and/or zigzag shape. In the same fuse 10, at least two fuse links 101 are arranged in sequence to be spaced apart in a first direction a.

Specifically, the fuse link 101 is in the shape of characters "N", "Z", "S", etc. The specific shape of the fuse link 101 depends on the practical application situation and is not limited thereto.

In one embodiment, in order to facilitate the installation of the fuse link 101, the fuse 10 further includes a connection piece 102, connection pieces 102 are arranged at both ends of the fuse link 101, and the connection pieces 102 are welded to the corresponding conductive members 20 by a welding process.

Specifically, the conductive member 20 can be in the shapes of sheet, plate or strip, etc. The specific shape of the conductive member 20 is determined depending on the practical application situation, and as long as it can be connected to the single cell 30.

Specifically, the thickness of the conductive member 20 ranges from 0.1mm to 1mm.

In one embodiment, the thickness of the conductive member 20 is 0.3mm.

In one embodiment, the cross-sectional size of a single fuse link 101 is 0.5mm×0.8mm.

It should be noted that the cross-sectional size of the fuse link 101 is positively correlated with the required fuse current. If the fuse link 101 has a large cross-sectional size, a large fuse current is required to fuse it. If the fuse link 101 has a small cross-sectional size, a small fuse current is required to fuse it. The specific sizes of the conductive member 20 and the fuse link 101 are determined according to the practical application situation and are not limited thereto.

It should be noted that at least two conductive members 20 and at least one fuse 10 are provided, and the specific number of conductive members 20 can be two, three, four or more; and one, two, three, four or more fuses 10 can be provided; the specific number of conductive members 20 and the specific number of fuses 10 match each other, are determined according to practical application situation and are not limited thereto.

In embodiments of the present application, the conductive member 20 includes a positive electrode connection part 201 and a negative electrode connection part 202, and the positive electrode connection part 201 and the negative electrode connection part 202 are arranged to be mutually staggered.

Specifically, the positive electrode connection parts 201 are configured to connect to the positive electrodes of single cells 30, and the negative electrode connection parts 202 are configured to connect to the negative electrodes of single cells 30. The positive electrode connection parts 201 and the negative electrode connection parts 202 are arranged to be mutually staggered. Thus, in the battery module composed of single cells 30, the connection in series is generally performed in the first direction a, and the connection in parallel is generally performed in a third direction b, so that a multi-parallel battery layout can be realized.

Specifically, the positive electrode connection part 201 and the negative electrode connection part 202 are mutually staggered in a radial direction of the single cell 30.

In a case where the single cell 30 is a cylindrical battery, the positive electrode of the cylindrical battery is higher than the negative electrode of the cylindrical battery, and the height difference generally ranges from 1mm to 2mm; therefore, in order to achieve the connection between the conductive member 20 and the single cell 30, there is also a height difference between the positive electrode connection part 201 and the negative electrode connection part 202, and the height difference between the positive electrode connection part 201 and the negative electrode connection part 202 and the height difference between the positive electrode and the negative electrode of the cylindrical battery are adapted to each other. In this way, the positive electrode connection part 201 and the negative electrode connection part 202 have a height difference in the axial direction of the single cell 30, and the positive electrode connection part 201 and the negative electrode connection part 202 are also mutually staggered in the axial direction of the single cell 30.

In embodiments of the present application, the positive electrode connection part 201 is provided with a process hole 40; when the conductive member 20 is welded to the positive electrode of the single cell 30, the process hole 40 can avoid deformation of the conductive member 20 due to stress, thereby improving the welding yield rate.

Referring to FIG. 1 to FIG. 4, a busbar is disclosed in the present application, which includes multiple fuse structures, and the multiple fuse structures are sequentially arranged in a second direction. In the same fuse structure, multiple conductive members 20 and multiple fuses 10 are alternately arranged in the third direction b.

In one embodiment, in order to achieve dense arrangement, the first direction a and the second direction are parallel to each other, and the first direction a and the third direction b are perpendicular to each other.

Referring to FIG. 1 to FIG. 4, a battery module is provided according to the present application, which includes the busbar in this embodiment, and further includes multiple single cells 30. The positive electrode connection parts 201 are connected to positive electrodes of the single cells 30, and the negative electrode connection parts 202 are connected to negative electrodes of the single cells 30. Two single cells 30 connected to the same conductive member 20 are mutually connected in series, two conductive members 20 connected to the same single cell 30 are mutually connected in series, the conductive members 20 and the single cells 30 mutually connected in series constitute a battery unit, and multiple battery units are mutually connected in parallel by the fuses 10. The battery module further includes a main positive busbar 50, a main negative busbar 60 and a clamping plate 70, the main positive busbar 50 is connected to the positive electrodes of the single cells 30, and the main negative busbar 60 is connected to the negative electrodes of the single cells 30. The busbar, the single cells 30, the main positive busbar 50 and the main negative busbar 60 are all connected to the clamping plate 70.

Specifically, in the battery module composed of single cells 30, the connection in series is generally performed in the first direction a, and the connection in parallel is generally performed in the third direction b, so that a multi-parallel battery layout can be realized.

In one embodiment, the single battery 30 is a cylindrical battery, such as a large cylindrical battery 4695; of course, the specific type of the single battery 30 is determined depending on the practical application situation and is not limited thereto.

Specifically, in order to facilitate the connection between the busbar with the fuse structures and the clamping plate 70, the conductive member 20 is provided with a positioning hole 80, and the installation position of the conductive member 20 is determined by the positioning hole 80.

Referring to FIG. 1 to FIG. 4, a battery pack is disclosed in the present application, which includes the battery module in this embodiment.

Referring to FIG. 1 to FIG. 4, an apparatus is disclosed in the present application, which includes the battery pack in this embodiment.

### Beneficial effects

In the fuse structure according to the present application, the conductive members and the fuse are spliced together to form a spliced structure, rather than an integrated structure in the prior art. In this way, during production, a fuse with a melting point lower than that of the conductive member can be selected according to the practical application situation. Thus, when a single cell fails due to a short circuit, only a small current is required, and the fuse can promptly and quickly cut off the electrical connection between the faulty single cell and other single cells connected in parallel with the faulty single cell, avoiding the current backflow causing the temperature of the faulty single cell to be too high, thereby avoiding thermal runaway. The curved and/or zigzag-shaped fuse can absorb the relative displacement between the two conductive members, such as the displacement caused by expansion during charging and discharging, displacement caused during mechanical vibration and impact, to avoid breakage of fuses and extend the service life, so high safety can be achieved.

The busbar according to the present application adopts the fuse structure according to the present application and therefore has a stable structure and high safety.

The battery module according to the present application adopts the busbar according to the present application, and in the battery module composed of single cells, the connection in series is generally performed in the first direction, and the connection in parallel is generally performed in a third direction, so that a multi-parallel battery layout can be realized, and the structure is stable and has a high safety.

The battery pack according to the present application adopts the battery module according to the present application and therefore can realize the multi-parallel battery layout, and has a stable structure and high safety.

The apparatus according to the present application adopts the battery pack according to the present application and therefore can realize the multi-parallel battery layout, and has a stable structure and high safety.

## Claims

1. A fuse structure, comprising a fuse (10) and a conductive member (20), wherein at least two conductive members (20) are arranged on sides of the fuse (10), the conductive members (20) and the fuse (10) are spliced together, and the fuse (10) is in any one or a combination of two of a curved and zigzag shape.

2. The fuse structure according to claim 1, wherein a melting point of the fuse (10) is lower than a melting point of the conductive member (20).

3. The fuse structure according to claim 2, wherein the conductive member (20) is made of copper, and the fuse (10) is made of aluminum.

4. The fuse structure according to claim 3, wherein a nickel plating layer is provided on a surface of the conductive member (20).

5. The fuse structure according to claim 1, wherein the fuse (10) comprises a fuse link (101), the fuse link (101) is in any one or a combination of two of a curved and zigzag shape, and in a same fuse (10), at least two fuse links (101) are arranged in sequence to be spaced apart in a first direction.

6. The fuse structure according to claim 5, wherein the fuse (10) further comprises a connection piece (102), the connection piece (102) is provided at each of two ends of the fuse links (101), and the connection piece (102) is welded to the corresponding conductive member (20).

7. The fuse structure according to any one of claims 1 to 6, wherein the conductive member (20) comprises a positive electrode connection part (201) and a negative electrode connection part (202), and the positive electrode connection part (201) and the negative electrode connection part (202) are arranged to be mutually staggered.

8. The fuse structure according to claim 7, wherein the positive electrode connection part (201) is provided with a process hole (40).

9. The fuse structure according to any one of claims 1 to 8, wherein the conductive member (20) is connected to the fuse (10) as a whole,
the fuse (10) is solid, and the fuse (10) is arranged in a casting cavity of the conductive member (20) to serve as an insert; or
the conductive member (20) is solid, and the conductive member (20) is arranged in a casting cavity of the fuse (10) to serve as an insert.

10. The fuse structure according to any one of claims 1 to 9, wherein the conductive member (20) is provided with a positioning hole (80) for positioning.

11. A busbar, comprising at least one fuse structure according to any one of claims 1 to 10; wherein at least two conductive members (20) and at least one fuse (10) are arranged alternately in a third direction.

12. A battery module, comprising the busbar according to claim 11, and further comprising a plurality of single cells (30), wherein positive electrode connection parts (201) of the conductive members (20) of the at least one fuse structure of the busbar are connected to positive electrodes of the single cells (30), and negative electrode connection parts (202) of the conductive members (20) are connected to negative electrodes of the single cells (30);
two single cells (30) connected to a same conductive member (20) are mutually connected in series, two conductive members (20) connected to a same single cell (30) are mutually connected in series, the conductive members (20) and the single cells (30) mutually connected in series constitute a battery unit, and a plurality of battery units are mutually connected in parallel by the fuses (10); and
the battery module further comprises a main positive busbar (50), a main negative busbar (60) and a clamping plate (70), the main positive busbar (50) is connected to the positive electrodes of the single cells (30), the main negative busbar (60) is connected to the negative electrodes of the single cells (30), and the busbar, the single cells (30), the main positive busbar (50) and the main negative busbar (60) are all connected to the clamping plate (70).

13. The battery module according to claim 12, wherein the single cell (30) is a cylindrical battery, the positive electrode connection part (201) and the negative electrode connection part (202) are mutually staggered in a radial direction of the single cell (30); and
the positive electrode connection part (201) and the negative electrode connection part (202) are mutually staggered in an axial direction of the single cell (30).

14. A battery pack, comprising the battery module according to claim 12 or 13.

15. An apparatus, comprising the battery pack according to claim 14.
